# EUROPEAN PATENT SPECIFICATION

(11) **EP 3 879 992 B1**
(45) Date of publication and mention of the grant of the patent: **28.02.2024**
(21) Application number: 19798645.8
(22) Date of filing: 07.11.2019
(51) Int. Cl.: A23C 11/08, A23F 5/40, A23C 11/02, A23L 29/231

(54) **LIQUID CREAMER AND METHOD FOR ITS PRODUCTION**
FLÜSSIGER KAFFEEWEISSER UND DESSEN HERSTELLUNGSPROZESS
CRÉMIER LIQUIDE ET METHODE DE PRODUCTION

(30) Priority: 14.11.2018 US 201862767010 P; 05.02.2019 EP 19155436
(43) Date of publication of application: 22.09.2021
(73) Proprietor: Société des Produits Nestlé S.A., 1800 Vevey (CH)
(72) Inventor: FU, Jun-Tse, Ray, Dublin, OH Ohio 43016 (US); ALDAPE FARIAS, Guadalupe Del Carmen, Columbus, OH 43235 (US); RAMIREZ PAVON, Patricia, Dublin, OH 43017 (US); SHER, Alexander, A, Dublin, OH Ohio 43017 (US)
(74) Representative: Vossius & Partner Patentanwälte Rechtsanwälte mbB
(86) International application number: PCT/EP2019/080521
(87) International publication number: WO 2020/099231

(56) References cited:
- WO-A1-2012/143515
- LAURENT M A ET AL: "Stabilization mechanism of acid dairy drinks (ADD) induced by pectin", FOOD HYDROCOLLOIDS, ELSEVIER BV, NL, vol. 17, no. 4, July 2003 (2003-07), pages 445-454, XP027414969, ISSN: 0268-005X [retrieved on 2003-07-01]

## Description

### Field of the Invention

The present invention relates to creamers for food products such as coffee and tea. In particular, the invention relates to a liquid creamer comprising casein based protein, phospholipids, pectin, calcium, bicarbonate, citrate and oil. Further aspects of the invention are a beverage comprising a liquid creamer and a process for preparing a liquid creamer.

### Background of the Invention

Creamers are widely used as whitening agents with hot and cold beverages such as, for example, coffee, cocoa, malt beverages and tea. They are commonly used in place of milk and/or dairy cream. Creamers may come in a variety of different flavours and provide mouthfeel, whitening, body, and a smooth texture. Creamers can be in liquid or powder forms. A liquid creamer may be intended for storage at ambient temperatures or under refrigeration, and should be stable during storage without phase separation, creaming, gelation, sedimentation or development of undesirable flavours. The liquid creamer should also retain a constant viscosity over time. When added to cold or hot beverages the liquid creamer should disperse rapidly, provide a good whitening capacity, and remain stable with no feathering and/or sedimentation while providing a superior taste and mouthfeel.

More and more consumers are concerned by synthetic or artificial additives in food products. Thus, there is a demand for commercially available liquid creamers which are free from synthetic ingredients or ingredients that the consumer may perceive as synthetic. Many consumers would prefer not to consume products containing synthetic emulsifiers or phosphate buffers. However, these are typically needed to guarantee the physical stability of the liquid creamer over the shelf life of the product and after pouring into coffee. In addition, they are needed to achieve the desired whitening and texture/mouthfeel effect in the coffee.

Many liquid creamers experience physical separation in low pH and high mineral content beverages, especially when added to high temperature beverages. The physical separation is often referred to as flocculation, curdling, clumping, aggregation or sedimentation. This phenomenon is related first to the discharge of emulsion droplets then the aggregation of the droplets. There is a need to provide liquid creamers that have an ingredient list attractive to consumers and yet are stable during shelf life and provide good sensorial properties without any physical instability when added to beverages. In addition, the liquid creamer must perform well when added to beverages brewed by consumers using water with a wide range of different hardness levels (for example water with different levels of dissolved calcium and magnesium).

Stable liquid creamer are known from WO2012143515 A1 (26.10.2012).

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

### Summary of the invention

An object of the present invention is to improve the state of the art and to provide an improved solution to overcome at least some of the inconveniences described above or at least to provide a useful alternative. The object of the present invention is achieved by the subject matter of the independent claims. The dependent claims further develop the idea of the present invention.

Accordingly, the present invention provides in a first aspect a liquid creamer comprising casein based protein, wherein the casein based protein is selected from the group consisting of caseinates, micellar casein and combinations of these, phospholipids, pectin, calcium, bicarbonate, citrate and oil wherein the casein based protein is present at a level between 0.45 and 1.55 %, the phospholipids are present at a level between 0.1 and 0.7 %, the pectin is present at a level between 0.05 and 0.2 %, the calcium is present at a level between 0.025 and 0.075 %, the bicarbonate is present at a level between 0.07 and 0.15 %, the citrate is present at a level between 0.12 and 0.24 %, and the oil is present at a level between 6 and 16 %; all percentages being as a weight percentage of the liquid creamer.

In a second aspect, the invention provides a beverage comprising the liquid creamer of the invention. A third aspect of the invention relates to a process of preparing the liquid creamer of the invention comprising: dissolving the ingredients as defined in claim 1 in hot water under agitation; sterilizing the composition using ultra-high temperature (UHT) treatment; homogenizing the composition; wherein the homogenization is performed before UHT treatment, after UHT treatment, or before and after UHT treatment.

It has been surprisingly found by the inventors that phospholipids (for example in the form of plant lecithin) with pectin at a specific range of concentrations together with calcium and in combination with bicarbonate and citrate as buffers provided good shelf life stability for liquid creamers giving stable oil-in-water emulsions with good whitening capabilities over a shelf-life of many months. The liquid creamer composition did not compromise texture and whitening capacity when added to hot coffees. Similar creamer behavior was found when added to hot tea. Additionally, the whitened coffee and tea had no instability issues such as feathering and/or de-oiling.

The liquid creamer composition of the invention may be used with water with a wide range of different hardness levels (for example water with different levels of dissolved calcium and magnesium). Casein based protein or phospholipids alone do not provide acceptable results in liquid creamers without the inclusion of emulsifiers such as mono- and di-glycerides or esters of these. It is surprising that the combination of casein based protein and phospholipids provide good functionality in the complex liquid creamer matrix, giving stable oil-in-water emulsions with good whitening capabilities over a shelf-life of many months. In particular it is surprising that a combination of pectin and phospholipids provides good functionality in liquid creamers containing caseinate, giving good tasting, stable oil-in-water emulsions with good whitening capabilities over a shelf-life of many months, for example without the need for low molecular mass emulsifiers. The combination of casein based protein, phospholipids and pectin is further enhanced in combination with bicarbonate and citrate at specific concentrations.

### Brief Description of the Drawings

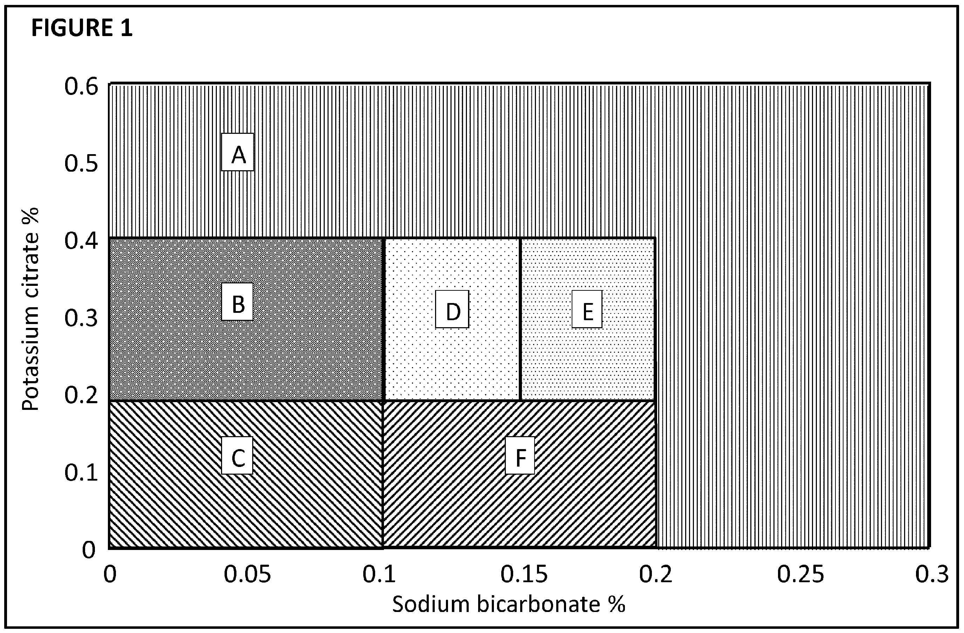

Figure 1 is a graphical representation of an evaluation of liquid creamers, varying the ratio between sodium bicarbonate and potassium citrate. Regions A - F are as discussed in Example 18.

### Detailed Description of the invention

Consequently the present invention relates in part to a liquid creamer comprising casein based protein, wherein the casein based protein is selected from the group consisting of caseinates, micellar casein and combinations of these, phospholipids, pectin, calcium, bicarbonate, citrate and oil wherein the casein based protein is present at a level between 0.45 and 1.55 % (for example between 0.5 and 1 %), the phospholipids are present at a level between 0.1 and 0.7 % (for example between 0.2 and 0.5 %), the pectin is present at a level between 0.05 and 0.20 % (for example between 0.10 and 0.15 %), the calcium (for example calcium ions) is present at a level between 0.025 and 0.075 % (for example between 0.04 and 0.06 %), the bicarbonate is present at a level between 0.07 and 0.15 % (for example between 0.08 and 0.12 %), the citrate is present at a level between 0.12 and 0.24 % (for example between 0.16 and 0.20 %), and the oil is present at a level between 6 and 16 % (for example between 6 and 12 %); all percentages being as a weight percentage of the liquid creamer. The combination of phospholipids, pectin, bicarbonate and citrate at the claimed levels provides a casein based protein (for example caseinate) creamer emulsion with good taste, stability and texture. Good stability can be achieved without the creamer being too thick to pour easily, or forming a gel.

Liquid creamers are used as whitening agents and texture/mouthfeel modifiers to enhance hot and cold beverages such as tea, coffee, cocoa and malted beverages, but may also be used in other food applications such as soups. They are available in a range of flavours to complement the beverage to which they are added and are also convenient for people who do not have a ready supply of fresh milk or who choose not to consume milk.

In the context of the present invention, casein based protein refers to the group consisting of caseinate, micellar casein and combinations of these. The casein based protein may be caseinate. The caseinate may for example be sodium caseinate, potassium caseinate or calcium caseinate. The liquid creamer of the invention may be free from protein other than casein based protein, for example it may be free from almond and coconut protein.

The phospholipids according to the invention may be comprised within plant lecithin, for example they may be comprised within lecithin from the group consisting of soy, sunflower, rapeseed (for example canola), cottonseed, oat and combinations of these. For example the phospholipids may be comprised within lecithin from the group consisting of sunflower, rapeseed (for example canola), cottonseed, oat and combinations of these. In an embodiment the phospholipids are comprised within sunflower lecithin or rapeseed (for example canola) lecithin. The phospholipids may be comprised within a lecithin which is from a non-genetically modified source. The phospholipids may be comprised within a de-oiled lecithin, for example a powdered de-oiled lecithin with a phospholipid content greater than 95 wt.%. The phospholipids may be comprised within a fluid lecithin, for example a lecithin comprising between 50 and 75 wt.% phospholipids together with triglycerides and smaller amounts of other substances. The phospholipids may be comprised within a fractionated lecithin. The phospholipids according to the invention may not be milk phospholipids, for example phospholipids according to the invention may not be phosphatidylethanolamide, phosphatidylcholine or sphingomyelin.

An embodiment of the invention provides a liquid creamer comprising caseinate, plant lecithin, pectin, calcium, bicarbonate, citrate and oil wherein the caseinate is present at a level between 0.45 and 1.55 %, the plant lecithin is present at a level to provide between 0.1 and 0.7 % phospholipids, the pectin is present at a level between 0.05 and 0.2 %, the calcium is present at a level between 0.025 and 0.075 %, the bicarbonate is present at a level between 0.07 and 0.15 %, the citrate is present at a level between 0.12 and 0.24 %, and the oil is present at a level between 6 and 16 %; all percentages being as a weight percentage of the liquid creamer.

Advantageously, the liquid creamer of the invention is stable without requiring emulsifiers that may be badly perceived by consumers. For example it may be stable during storage at refrigeration and ambient temperatures for at least 6 months. For example it may be stable when added to cold or hot coffee or tea. In an embodiment, the liquid creamer contains less than 0.001 wt.% of monoacylglycerols (MAG), diacylglycerols (DAG) and diacetylated tartaric acid esters of monoglycerides (DATEM). For example, the liquid creamer may contain less than 0.0001 wt.% of MAG, DAG and DATEM. The liquid creamer of the invention may be free from added MAG, DAG and DATEM. By the term "free from added" is meant that the creamer composition does not contain any MAG, DAG or DATEM which have been added as such or are in amounts sufficient to substantially affect the stability of the creamer emulsion. A creamer free from added MAG, DAG and DATEM may contain minor amounts of these emulsifiers which do not substantially affect the stability of the emulsion, but which are present e.g. as minor impurities of one or more of the ingredients of the liquid creamer. For example, vegetable oils may naturally contain small amounts of monoacylglycerols and diacylglycerols. The liquid creamer of the invention may be free from MAG, DAG and DATEM. Monoacylglycerols are also known as monoglycerides and diacylglycerols are also known as diglycerides.

In an embodiment, the liquid creamer contains less than 0.001 wt.% (for example less than 0.0001 wt.%) of low molecular weight emulsifiers other than those naturally comprised within lecithin such as phospholipids and glycolipids. For example the liquid creamer may contain less than 0.001 wt.% (for example less than 0.0001 wt.%) of synthetic low molecular weight emulsifiers. In the context of the present invention the term low molecular mass emulsifiers refers to emulsifiers with a molecular mass below 1500 Dalton. Casein based proteins according to the invention are not low molecular mass emulsifiers. The liquid creamer of the invention may be free from added low molecular mass emulsifiers other than those naturally comprised within lecithin such as phospholipids and glycolipids, for example the liquid creamer of the invention may be free from low molecular mass emulsifiers other than those naturally comprised within lecithin such as phospholipids and glycolipids. The term "naturally comprised within lecithin" means substances which are present in lecithin and in the natural material from which it was extracted. The liquid creamer of the invention may be free from added synthetic low molecular mass emulsifiers, for example the liquid creamer of the invention may be free from synthetic low molecular mass emulsifiers. Low molecular mass emulsifiers include, but are not limited to, monoacylglycerols, diacylglycerols, diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides, and diglycerides and sucrose esters of fatty acids.

In one embodiment a creamer composition according to the invention is free from added monoacylglycerols, diacylglycerols, diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides, and sucrose esters of fatty acids.

Advantageously, the liquid creamer of the invention is stable without requiring pH buffering ingredients that may be badly perceived by consumers such as phosphate salts. For example it may be stable during storage at refrigeration and ambient temperatures for at least 6 months. For example it may be stable when added to cold or hot coffee or tea. In an embodiment the liquid creamer contains less than 0.001 wt.% (for example less than 0.0001 wt.%) phosphate salts. The liquid creamer of the invention may be free from added phosphate salts, for example the liquid creamer of the invention may be free from phosphate salts. Phosphate salts include monosodium phosphate, monopotassium phosphate, disodium phosphate, dipotassium phosphate, trisodium phosphate, tripotassium phosphate, sodium hexametaphosphate, potassium hexametaphosphate, sodium tripolyphosphate, potassium tripolyphosphate, sodium pyrophosphate, potassium pyrophosphate, sodium hexametaphosphate and potassium hexametaphosphate. In one embodiment a creamer composition according to the invention is free of added monosodium phosphate, monopotassium phosphate, disodium phosphate, dipotassium phosphate, trisodium phosphate, tripotassium phosphate, sodium hexametaphosphate, potassium hexametaphosphate, sodium tripolyphosphate, potassium tripolyphosphate, sodium pyrophosphate, potassium pyrophosphate, sodium hexametaphosphate and potassium hexametaphosphate.

The combination of pectin and phospholipids provides a liquid creamer which is stable without the addition of further gums such as acacia gum and guar gum. This is advantageous as consumers desire products with short lists of ingredients. For example the liquid creamer may be stable during storage at refrigeration and ambient temperatures for at least 6 months. For example it may be stable when added to cold or hot coffee or tea. In an embodiment, the liquid creamer of the invention contains less than 0.001 wt.% polysaccharides other than pectin, for example less than 0.0001 wt.% polysaccharides other than pectin. The liquid creamer of the invention may be free from added polysaccharides other than pectin, for example it may be free from polysaccharides other than pectin. In the context of the present invention the term polysaccharide refers to saccharide polymers of more than 10 monosaccharide units.

Pectin is a structural heteropolysaccharide contained in the primary cell walls of terrestrial plants. Pectin is most concentrated in citrus fruits (oranges, lemons, grapefruits) and apples. Pectin, also known as pectic polysaccharides, is a family of complex polysaccharides that contain 1,4-linked α-D-galactosyluronic residues. Three pectic polysaccharides, homogalacturonan, rhamnogalacturonan-I and substituted galacturonans, have been isolated from primary plant cell walls. The esterification of galacturonic acid residues with methanol or acetic acid is a very important structural characteristic of pectic substances. The degree of methylation (DM) is defined as the percentage of carbonyl groups esterified with methanol. If more than 50% of the carboxyl groups are methylated the pectin is called high-methoxy pectin (HM), and pectin with 50% or less methylation is called low methoxy (LM) pectin. It was surprisingly found that low methoxy pectin in combination with calcium provided especially good product texture/mouthfeel for liquid creamers as well as shelf life stability. In an embodiment of the invention, the pectin is low methoxy pectin.

The calcium according to the liquid creamer of the invention provides calcium ions to interact with the pectin, in particular low methoxy pectin. The combination of pectin (for example low methoxy pectin) and calcium in the proportions of the liquid creamer of the invention generate good mouthfeel without full gel formation and provide emulsification. Without wishing to be bound by theory the inventors believe a microgel is formed. In an embodiment, the calcium is added in a form selected from the group consisting of calcium lactate, calcium chloride, calcium citrate and combinations thereof. For example the calcium may be added in the form of calcium lactate.

The citrate according to the liquid creamer of the invention may be provided in the form of a salt selected from the group consisting of potassium citrate, sodium citrate, calcium citrate, magnesium citrate and combinations of these. The citrate according to the liquid creamer of the invention may be provided in the form of citric acid, for example comprised within citrus juice such as lemon juice. The bicarbonate according to the liquid creamer of the invention may be provided in the form of a salt selected from the group consisting of potassium bicarbonate, sodium bicarbonate and combinations of these. In an embodiment, the citrate is provided in the form of potassium citrate and the bicarbonate is provided in the form of sodium bicarbonate (baking soda).

In an embodiment of the invention the pH of the liquid creamer at 25 °C is between 6 and 8, for example between 6.5 and 7.5.

In an embodiment the oil is selected from the group consisting of coconut oil, high oleic canola oil, high oleic soybean oil, high oleic sunflower oil, high oleic safflower oil and combinations of these. For example, the oil may be selected from the group consisting of coconut oil, high oleic canola oil, high oleic sunflower oil, high oleic safflower oil and combinations of these. The oil according to the liquid creamer of the invention may have a solid fat content of less than 1% at 4 °C. This provides good stability of the creamer emulsion at temperatures such as might be encountered in a refrigerator as solidification of the oil can lead to precipitation. The solid fat content may be measured by pulsed NMR, for example according to the IUPAC Method 2.150 (a), method without special thermal pre-treatment [International Union of Pure and Applied Chemistry, Standard Methods for the Analysis of Oils, Fats and Derivatives, 7th Revised and Enlarged Edition (1987)]. The oil according to the invention may be selected from the group consisting of canola oil, soybean oil, sunflower oil, safflower oil, algal oil and fractions and combinations of these. High oleic oils provide health benefits due to their high content of monounsaturated fats and have good stability. The oil according to the invention may be selected from the group consisting of high oleic canola oil, high oleic soybean oil, high oleic sunflower oil, high oleic safflower oil, high oleic algal oil and combinations of these.

The liquid creamer of the invention may comprise a sweetener, for example a sweetener found in nature. In an embodiment, the liquid creamer comprises a sweetener selected from the group consisting of sucrose, fructose, glucose, hydrolysed starch syrup (for example with a dextrose equivalent (DE) value between 40 and 100), allulose, sorbitol, maltitol, erythritol, mogrosides, steviol glycosides and combinations of these. For example the liquid creamer may comprise a sweetener selected from the group consisting of sucrose, fructose, glucose, allulose, sorbitol, maltitol, erythritol, mogrosides, steviol glycosides and combinations of these. Sucrose may be the form of cane sugar, beet sugar or molasses; for example the sweetener according to the invention may be cane sugar, beet sugar or molasses. Fructose, glucose or sucrose may be comprised within agave syrup, accordingly the sweetener according to the invention may be agave syrup. Fructose and glucose are components of honey, accordingly the sweetener according to the invention may be honey. Sorbitol, maltitol and erythritol are found in fruits or can be produced by enzymatic reactions from natural starting materials. Mogrosides are found in monk fruit (the fruit of *Siraitia grosvenorii*). Accordingly the sweetener according to the invention may be monk fruit juice. Steviol glycosides are found in the leaves of stevia (*Stevia rebaudiana*). Accordingly the sweetener according to the invention may be stevia or an extract of stevia.

In an embodiment, the liquid creamer comprises between 20 and 50 wt.% of saccharides, for example saccharides having ten or fewer monosaccharide units such as maltodextrin, sucrose, lactose, fructose and glucose. For example the creamer may comprise between 20 and 50 wt.% of sucrose. In an embodiment, the liquid creamer is free from sucrose.

In an embodiment the liquid creamer is free from added solid particulate whiteners, for example the liquid creamer is free from solid particulate whiteners. The oil droplets of the liquid creamer emulsion interact with light falling on the creamer so that the creamer appears white. It is advantageous that the liquid creamer of the invention provides an emulsion that appears white and maintains its whiteness on storage without the need to add solid particulate whiteners. Emulsions that separate, cream (droplets rising to the top) or which have droplets that coalesce lose their white appearance, but the combination of phospholipids, pectin, calcium, bicarbonate and citrate at the claimed levels provides an emulsion with good stability, maintaining its white appearance. Solid particulate whiteners such as titanium dioxide provide excellent whitening power, but are avoided by some consumers who consider them to be synthetic.

The liquid creamer of the invention has good stability, for example it may have a shelf-life of at least 6 months at 4, 20 or 30 °C. In an embodiment the liquid creamer is a shelf-stable liquid creamer, for example it may have a shelf-life of at least 6 months at 20 °C. It is advantageous that the liquid creamer of the invention is stable without the need for refrigeration. It is also advantageous that the composition of the liquid creamer is able to withstand heat treatments necessary to kill or reduce spoilage organisms. In an embodiment, the liquid creamer may be an aseptically packed creamer.

An aspect of the invention provides a beverage comprising the liquid creamer of the invention, for example a coffee beverage, a tea beverage, a cocoa or chocolate beverage or a malted beverage. In an embodiment, the beverage is a ready-to-drink beverage. By a ready-to-drink beverage is meant a beverage in liquid form ready to be consumed without requiring further addition of liquid. For example the beverage of the invention may be a beverage comprising water, a beverage-forming component and a sufficient amount of the liquid creamer of the invention to provide whitening, good texture and mouthfeel.

An aspect of the invention provides a process of preparing the liquid creamer of the invention comprising; dissolving the ingredients as defined in claim 1 in hot water under agitation; sterilizing the composition using ultra-high temperature (UHT) treatment; homogenizing the composition; wherein the homogenization is performed before UHT treatment, after UHT treatment, or before and after UHT treatment. The UHT treatment may for example be a treatment of between 3 and 12 seconds at between 130 and 150 °C. In an embodiment, the liquid creamer may be aseptically filled into a container, which is then aseptically sealed. The liquid creamer may be cooled before being filled into a container. For example, the aseptic filling may be performed at 0.5 - 10°C.

Further advantages and features of the present invention are apparent from the figure and non-limiting examples.

### Examples

1 w/w% hot (^{~} 90-95°C) coffee solution was prepared using hard water (350 ppm calcium carbonate hardness) and different creamers added. The creamers were produced as follows.

### EXAMPLE 1

30 kg sugar, 500 g sodium caseinate, 200 g sunflower lecithin ((Emulpur^{®} SF, Cargill) (phospholipid content > 97%), 100 g low methoxy pectin (GENU^{®} LM-18 CG, CPKelco), 100 g sodium bicarbonate (comprising 73 g carbonate), 300 g potassium citrate (comprising 185 g citrate) and 400 g calcium lactate pentahydrate (comprising 52 g calcium) (PURACAI^{®} PP/USP) were added into 50 kg of hot water (^{~} 75°C) under high agitation.

Next, 8 kg of high oleic soybean oil was added to the above liquids under high agitation. Then, additional water was added to adjust the total amount to 100 kg.

The liquid creamer was pre-homogenized at 135/35 bars, UHT treated for 10 sec at 140°C, homogenized at 135/35 bars, and cooled. Then the liquid creamer was aseptically filled into bottles.

The physico-chemical stability and sensory parameters of the liquid creamer and coffee beverage with added liquid creamer were judged by trained panellists.

No phase separation (creaming, de-oiling, marbling, etc.), gelation, and practically no viscosity changes were found during the storage.

Good visual appearance, whitening, mouthfeel, smooth texture and a good flavour without off notes were found in beverage when liquid creamer was added to hot coffee.

### EXAMPLE 2

A liquid creamer was prepared as in Example 1 but using 1 kg sodium caseinate.

The physico-chemical stability and sensory of creamer and coffee beverages with added liquid creamer were judged by trained panellists.

No phase separation (creaming, de-oiling, marbling, etc.) was found during the storage. Good visual appearance, whitening, mouthfeel, smooth texture and a good flavour without off notes was found in beverage when liquid creamer was added to hot coffee.

### EXAMPLE 3

A liquid creamer was prepared as in Example 1 but using 1.5 kg sodium caseinate.

The physico-chemical stability and sensory of creamer and coffee beverages with added liquid creamer were judged by trained panellists.

No phase separation (creaming, de-oiling, marbling, etc.) was found during the storage. Good visual appearance, whitening, mouthfeel, smooth texture and a good flavour without off notes was found in beverage when liquid creamer was added to hot coffee.

### EXAMPLE 4 (comparative)

A liquid creamer was prepared as in Example 1 but using 400 g sodium caseinate
The physico-chemical stability and sensory of creamer and coffee beverages with added liquid creamer were judged by trained panellists. Creaming was found during the storage.

### EXAMPLE 5 (comparative)

A liquid creamer was prepared as in Example 1 but using 1.7 g sodium caseinate
The physico-chemical stability and sensory of creamer and coffee beverages with added liquid creamer were judged by trained panellists.

No phase separation (creaming, de-oiling, marbling, etc.), gelation, and practically no viscosity changes were found during the storage. However, feathering was found when liquid creamer was added to hot coffee.

### EXAMPLE 6

A liquid creamer was prepared as in Example 2 but using 500 g sunflower lecithin.

The physico-chemical stability and sensory of creamer and coffee beverages with added liquid creamer were judged by trained panellists.

No phase separation (creaming, de-oiling, marbling, etc.), gelation were found during the storage. Good visual appearance, whitening, mouthfeel, smooth texture and a good flavour without off notes was found in beverage when liquid creamer was added to hot coffee.

### EXAMPLE 7 (comparative)

A liquid creamer was prepared as in Example 2 but with 50 g sunflower lecithin.

The physico-chemical stability and sensory of creamer and coffee beverages with added liquid creamer were judged by trained panellists.

Creaming was found during the storage. Further, de-oiling was found when added to hot coffee.

### EXAMPLE 8 (comparative)

A liquid creamer was prepared as in Example 2 but with 800 g sunflower lecithin.

The physico-chemical stability and sensory of creamer and coffee beverages with added liquid creamer were judged by trained panellists.

No phase separation (creaming, de-oiling, marbling, etc) was found during the storage. However, green and oily off flavours were found when liquid creamer was added to hot coffee.

### EXAMPLE 9

A liquid creamer was prepared as in Example 2 but with 300 g canola lecithin (Emulpur^{®} RS, Cargill).

No phase separation (creaming, de-oiling, marbling, etc.) were found during the storage. Good visual appearance, whitening, mouthfeel, smooth texture and a good flavour without off notes were found in beverage when liquid creamer was added to hot coffee.

### EXAMPLE 10 (comparative)

A liquid creamer was prepared as in Example 2 but with 800 g canola lecithin.

The physico-chemical stability and sensory of creamer and coffee beverages with added liquid creamer were judged by trained panellists. No phase separation (creaming, de-oiling, marbling, etc) was found during the storage.

However, green and oily off flavours were found when liquid creamer was added to hot coffee.

### EXAMPLE 11 (comparative)

A liquid creamer was prepared as in Example 2 but using 30 g low methoxy pectin.

The physico-chemical stability and sensory of creamer and coffee beverages with added liquid creamer were judged by trained panellists. Phase separation was found during the storage.

### EXAMPLE 12 (comparative)

A liquid creamer was prepared as in Example 2 but using 300 g low methoxy pectin.

The physico-chemical stability and sensory of creamer and coffee beverages with added liquid creamer were judged by trained panellists. Marbling and gelation were found during the storage.

### EXAMPLE 13 (comparative)

A liquid creamer was prepared as in Example 2 but using 100 g high methoxy pectin (SLENDID^{®} 200, CP Kelco).

The physico-chemical stability and sensory of creamer and coffee beverages with added liquid creamer were judged by trained panellists.

Phase separation was found during the storage.

### EXAMPLE 14

A liquid creamer was prepared as in Example 2 but using 400 g calcium lactate pentahydrate (comprising 52 g calcium).

The physico-chemical stability and sensory of creamer and coffee beverages with added liquid creamer were judged by trained panellists.

No phase separation (creaming, de-oiling, marbling, etc.) was found during the storage. Good visual appearance, whitening, mouthfeel, smooth texture and a good flavour without off notes were found in beverage when liquid creamer was added to hot coffee.

### EXAMPLE 15 (comparative)

A liquid creamer was prepared as in Example 2 but using 100 g calcium lactate pentahydrate.

The physico-chemical stability and sensory of creamer and coffee beverages with added liquid creamer were judged by trained panellists.

Phase separation was found during the storage.

### EXAMPLE 16 (comparative)

A liquid creamer was prepared as in Example 2 but using 700 g calcium lactate pentahydrate.

The physico-chemical stability and sensory of creamer and coffee beverages with added liquid creamer were judged by trained panellists.

Gelation was found during the storage.

### EXAMPLE 17

A liquid creamer was prepared as in Example 2 but using 1 kg micellar casein (Leprino Foods Dairy Products Co) instead of sodium caseinate.

The physico-chemical stability and sensory of creamer and coffee beverages with added liquid creamer were judged by trained panellists.

No phase separation (creaming, de-oiling, marbling, etc.) was found during the storage. Good visual appearance, whitening, mouthfeel, smooth texture and a good flavour without off notes were found in beverage when liquid creamer was added to hot coffee.

### EXAMPLE 18

Liquid creamers were prepared as in Example 2 but varying ratio between sodium bicarbonate and potassium citrate.

The physico-chemical stability and sensory of creamer and coffee beverages with added liquid creamer were judged by trained panellists. Results of the evaluation are shown in Figure 1. Regions A, B, C and F were unacceptable. Region A, where potassium citrate was > 0.4 wt.% (citrate > 0.24 wt.%) showed bitter and chemical off flavours. Region B, where sodium bicarbonate was < 0.1 wt.% (bicarbonate < 0.07 wt.%) gave a sour off flavour note. Region C had a sour flavour note coupled with feathering caused by water hardness and low pH. Region F, where potassium citrate < 0.2 wt.% (citrate < 0.12 wt.%) showed feathering defects due to water hardness. Good results were obtained in region D and E, with the best results being in region D.

Good physico-chemical stability of liquid creamers as well as good visual appearance, whitening, mouthfeel, smooth texture and a good flavour without off notes were found in the beverage when liquid creamer was added to coffee, for the following combination of sodium bicarbonate and potassium citrate ranging from 0.1 to 0.2 and from 0.2 to 0.4 w/w%, respectively, that is bicarbonate and citrate ranging from 0.07 to 0.15 and from 0.12 to 0.24 w/w%, respectively.

## Claims

1. Liquid creamer comprising casein based protein, phospholipids, pectin, calcium, bicarbonate, citrate and oil wherein
the casein based protein is selected from the group consisting of caseinates, micellar casein and combinations of these;
the casein based protein is present at a level between 0.45 and 1.55 %,
the phospholipids are present at a level between 0.1 and 0.7 %,
the pectin is present at a level between 0.05 and 0.2 %,
the calcium is present at a level between 0.025 and 0.075 %,
the bicarbonate is present at a level between 0.07 and 0.15 %,
the citrate is present at a level between 0.12 and 0.24 %, and
the oil is present at a level between 6 and 16 %;
all percentages being as a weight percentage of the liquid creamer.

2. A liquid creamer according to claim 1 which contains less than 0.001 wt.% monoacylglycerols, diacylglycerols and diacetylated tartaric acid esters of monoglycerides.

3. A liquid creamer according to claim 1 or claim 2 which contains less than 0.001 wt.% phosphate salts.

4. A liquid creamer according to any one of claims 1 to 3 which contains less than 0.001 wt.% polysaccharides other than pectin.

5. A liquid creamer according to any one of claims 1 to 4 wherein the pectin is a low methoxy pectin.

6. A liquid creamer according to any one of claims 1 to 5 wherein the phospholipids are comprised within sunflower lecithin or rapeseed lecithin.

7. A liquid creamer according to any one of claims 1 to 6 wherein the oil is selected from the group consisting of coconut oil, high oleic canola oil, high oleic sunflower oil, high oleic soybean oil, high oleic safflower oil and combinations of these.

8. A liquid creamer according to any one of claims 1 to 7 comprising a sweetener selected from the group consisting of sucrose, fructose, glucose, allulose, sorbitol, maltitol, erythritol, mogrosides, steviol glycosides and combinations of these.

9. A liquid creamer according to any one of claims 1 to 8 wherein the creamer is free from added solid particulate whiteners.

10. A liquid creamer according to any one of claims 1 to 9 wherein the creamer is a shelf-stable liquid creamer.

11. Beverage comprising a liquid creamer according to any one of claims 1 to 10.

12. A beverage according to claim 11 which is a ready-to-drink coffee beverage.

13. Process of preparing the liquid creamer according to any one of claims 1 to 10 comprising;
dissolving the ingredients as defined in claim 1 in hot water under agitation; sterilizing the composition using ultra-high temperature (UHT) treatment;
homogenizing the composition;
wherein the homogenization is performed before UHT treatment, after UHT treatment, or before and after UHT treatment.

14. A process according to claim 13 wherein the liquid creamer is aseptically filled into a container, which is then aseptically sealed.

## Patentansprüche

1. Flüssiger Kaffeeweißer, umfassend ein caseinbasiertes Protein, Phospholipide, Pektin, Calcium, Bicarbonat, Citrat und Öl, wobei
das caseinbasierte Protein aus der Gruppe ausgewählt ist, bestehend aus Caseinaten, micellarem Casein und Kombinationen davon;
das caseinbasierte Protein in einem Gehalt zwischen 0,45 und 1,55 % vorhanden ist,
die Phospholipide in einem Gehalt zwischen 0,1 und 0,7 % vorhanden sind,
das Pektin in einem Gehalt zwischen 0,05 und 0,2 % vorhanden ist,
das Calcium in einem Gehalt zwischen 0,025 und 0,075 % vorhanden ist,
das Bicarbonat in einem Gehalt zwischen 0,07 und 0,15 % vorhanden ist,
das Citrat in einem Gehalt zwischen 0,12 und 0,24 % vorhanden ist und
das Öl in einem Gehalt zwischen 6 und 16 % vorhanden ist;
alle Prozentsätze als ein Gewichtsprozentsatz des flüssigen Kaffeeweißers sind.

2. Flüssiger Kaffeeweißer nach Anspruch 1, der weniger als 0,001 Gew.-% Monoacylglycerine, Diacylglycerine und diacetylierte Weinsäureester von Monoglyceriden enthält.

3. Flüssiger Kaffeeweißer nach Anspruch 1 oder 2, der weniger als 0,001 Gew.-% Phosphatsalze enthält.

4. Flüssiger Kaffeeweißer nach einem der Ansprüche 1 bis 3, der weniger als 0,001 Gew.-% Polysaccharide enthält, die sich von Pektin unterscheiden.

5. Flüssiger Kaffeeweißer nach einem der Ansprüche 1 bis 4, wobei das Pektin ein Niedrigmethoxypektin ist.

6. Flüssiger Kaffeeweißer nach einem der Ansprüche 1 bis 5, wobei die Phospholipide innerhalb von Sonnenblumenlecithin oder Rapslecithin enthalten sind.

7. Flüssiger Kaffeeweißer nach einem der Ansprüche 1 bis 6, wobei das Öl aus der Gruppe ausgewählt ist, bestehend aus Kokosöl, Rapsöl mit hohem Ölsäureanteil, Sonnenblumenöl mit hohem Ölsäureanteil, Sojaöl mit hohem Ölsäureanteil, Safloröl mit hohem Ölsäureanteil und Kombinationen davon.

8. Flüssiger Kaffeeweißer nach einem der Ansprüche 1 bis 7, umfassend ein Süßungsmittel, das aus der Gruppe ausgewählt ist, bestehend aus Saccharose, Fructose, Glucose, Allulose, Sorbit, Maltitol, Erythrit, Mogrosiden, Steviolglycosiden und Kombinationen davon.

9. Flüssiger Kaffeeweißer nach einem der Ansprüche 1 bis 8, wobei der Kaffeeweißer frei von zusätzlichen festen Weißern ist.

10. Flüssiger Kaffeeweißer nach einem der Ansprüche 1 bis 9, wobei der Kaffeeweißer ein haltbarer flüssiger Kaffeeweißer ist.

11. Getränk, umfassend einen flüssigen Kaffeeweißer nach einem der Ansprüche 1 bis 10.

12. Getränk nach Anspruch 11, das ein trinkfertiges Kaffeegetränk ist.

13. Verfahren zum Herstellen des flüssigen Kaffeeweißers nach einem der Ansprüche 1 bis 10, umfassend;
Lösen der Inhaltsstoffe, wie in Anspruch 1 definiert, in heißem Wasser unter Rühren;
Sterilisieren der Zusammensetzung unter Verwendung einer Ultrahocherhitzungsbehandlung (UHT-Behandlung);
Homogenisieren der Zusammensetzung;
wobei die Homogenisierung vor der UHT-Behandlung, nach der UHT-Behandlung oder vor und nach der UHT-Behandlung durchgeführt wird.

14. Verfahren nach Anspruch 13, wobei der flüssige Kaffeeweißer in einen Behälter aseptisch gefüllt wird, der dann aseptisch versiegelt wird.

## Revendications

1. Succédané de crème liquide comprenant une protéine à base de caséine, des phospholipides, de la pectine, du calcium, du bicarbonate, du citrate et de l'huile dans lequel
la protéine à base de caséine est choisie dans le groupe constitué par les caséinates, la caséine micellaire et des combinaisons de ceux-ci ;
la protéine à base de caséine est présente à un niveau compris entre 0,45 et 1,55 %,
les phospholipides sont présents à un taux compris entre 0,1 et 0,7 %,
la pectine est présente à un taux compris entre 0,05 et 0,2 %,
le calcium est présent à un taux compris entre 0,025 et 0,075 %,
le bicarbonate est présent à un taux compris entre 0,07 et 0,15 %,
le citrate est présent à un taux compris entre 0,12 et 0,24 %, et
l'huile est présente à un taux compris entre 6 et 16 % ;
tous les pourcentages étant en pourcentage en poids du succédané de crème liquide.

2. Succédané de crème liquide selon la revendication 1, qui contient moins de 0,001 % en poids de monoacylglycérols, de diacylglycérols et des esters d'acide tartrique diacétylé de monoglycérides.

3. Succédané de crème liquide selon la revendication 1 ou la revendication 2, qui contient moins de 0,001 % en poids de sels de phosphate.

4. Succédané de crème liquide selon l'une quelconque des revendications 1 à 3, qui contient moins de 0,001 % en poids de polysaccharides autres que la pectine.

5. Succédané de crème liquide selon l'une quelconque des revendications 1 à 4, dans lequel la pectine est une pectine à faible teneur en méthoxy.

6. Succédané de crème liquide selon l'une quelconque des revendications 1 à 5, dans lequel les phospholipides sont compris dans la lécithine de tournesol ou la lécithine de colza.

7. Succédané de crème liquide selon l'une quelconque des revendications 1 à 6, dans lequel l'huile est choisie dans le groupe constitué d'huile de coco, d'huile de canola oléique à haute teneur en acide oléique, d'huile de tournesol à haute teneur en acide oléique, d'huile de soja à haute teneur en acide oléique, d'huile de carthame à haute teneur en acide oléique et des combinaisons de celles-ci.

8. Succédané de crème liquide selon l'une quelconque des revendications 1 à 7 comprenant un édulcorant choisi dans le groupe constitué de saccharose, fructose, glucose, allulose, sorbitol, maltitol, érythritol, mogrosides, glycosides de stéviol et des combinaisons de ceux-ci.

9. Succédané de crème liquide selon l'une quelconque des revendications 1 à 8, dans lequel le succédané de crème est exempt d'agents de blanchiment particulaires solides ajoutés.

10. Succédané de crème liquide selon l'une quelconque des revendications 1 à 9, dans lequel le succédané de crème est un succédané de crème liquide à longue durée de conservation.

11. Boisson comprenant un succédané de crème liquide selon l'une quelconque des revendications 1 à 10.

12. Boisson selon la revendication 11 qui est une boisson au café prête à boire.

13. Procédé de préparation du succédané de crème liquide selon l'une quelconque des revendications 1 à 10 comprenant ;
la dissolution des ingrédients tels que définis dans la revendication 1 dans de l'eau chaude sous mélange ;
la stérilisation de la composition à l'aide d'un traitement à ultra-haute température (UHT) ;
l'homogénéisation de la composition ;
dans lequel l'homogénéisation est effectuée avant traitement UHT, après traitement UHT, ou avant et après traitement UHT.

14. Procédé selon la revendication 13, dans lequel le succédané de crème liquide est rempli de manière aseptique dans un récipient, qui est ensuite scellé par voie aseptique.
